Europäisches Patentamt

European Patent Office

Office européen des brevets

(11) Publication number: **0 110 233**
A2

# (12) EUROPEAN PATENT APPLICATION

(21) Application number: 83111389.9

(22) Date of filing: 14.11.83

(51) Int. Cl.³: **F 16 F 1/44**, B 60 G 11/22

(30) Priority: **29.11.82 IT 2448382**

(43) Date of publication of application: **13.06.84**
**Bulletin 84/24**

(84) Designated Contracting States: **DE FR GB**

(71) Applicant: **INDUSTRIE PIRELLI S.p.A., Piazzale Cadorna 5, I-20123 Milan (IT)**

(72) Inventor: **Tangorra, Giorgio, Via Ramazzotti 12, Monza (Milan) (IT)**

(74) Representative: **Mariani, Giorgio, Dr. et al, INDUSTRIE PIRELLI S.p.A. Direzione Brevetti Piazzale Cadorna, 5, I-20123 Milano (IT)**

(54) **Shock-absorbing device.**

(57) Shock-absorbing device (1) comprising an elastomeric body provided with a plurality of cavities (2) arranged on transversal planes of the body; the cavities of one plane are offset with respect to the cavities of the adjacent planes. The portion of elastomeric material (4) comprised between two adjacent cavities in one same transversal plane is arranged substantially in central position with respect to the underlying cavity.

1

SHOCK-ABSORBING DEVICE

Specification

The present invention refers to a shock-absorbing device and more particularly to a shock-absorbing device used for suspensions in general and as a device contrasting vibrations, to be used among other things in the motor vehicle and railway field. The shock-absorbing devices have the task of avoiding the arising of troublesome vibrations with the consequent production of negative mechanical stresses for a correct operation.

These devices must assure and guarantee a continuous operation in time and must be able to absorb the energy received, dissipating a great quantity of said energy so as to return only a very small part in the subsequent phases.

Among the known shock-absorbing devices there are cited those based on the dissipation of energy due to friction phenomena.

Said devices based on the dissipation of the received energy due to friction phenomena, are used satisfactorily in many applications; however, their use can sometimes produce the drawback of a rapid wear of the parts in movement compromising thus the operation of the device itself.

Further devices are known in which the damping effect is obtained by viscous type dissipation.

Generally, these devices comprise a chamber in which there is a viscous liquid; a plate connected with the movable element acts on the liquid.

During the movement of to the element, the plate determinates the lamination of the liquid between the walls of the chamber and the plate itself.

Said devices, although causing the damping of the oscillating element, have the drawback of transmitting the high frequency oscillations with the consequence of transmitting, for example in case of suspensions for motorvehicles, annoying oscillation to the passenger.

A further drawback of the shock-absorbing devices based on the use of viscous fluids resides in the complicated realization of the chamber containing said liquid, owing to the particular problem of the necessary fluid-tight means in order to assure the correct operation of the whole device.

Also, there are known further shock-absorbing devices using bodies of elastomeric material with particularly hysteretic compounds. Unfortunately, said devices being sometimes particularly high, when subjected to the force to be absorbed, undergo lateral bendings with consequent misalignment and irregular operation of the device.

Said negative aspect of the shock-absorbing devices using high hysteresis elastomeric material depends on the fact that the compression force is exerted on a body in which there is a deformation without a variation of volume, so that the higher the body is, the greater the possibility of a lateral bending will be.

A further drawback of the cited devices resides in the fact that the hysteretic compound theoretically is apt to absorb a strong percentage of energy with modest return of said energy, however, very often it happens to find a different condition in the operation, since being the compound particularly rigid, can originate excessive values of its reaction causing thus an ineffective damping effect.

Therefore, the aim of the present invention is a shock-absorbing device apt to damp the oscillations in the elements contrasting vibrations or in the suspensions of railway vehicles or of motorvehicles devoid of the cited drawbacks.

The object of the present invention is a shock-absorbing device comprising a body of elastomeric material having an axis aligned with the direction of the force to be damped, characterized by the fact that said body comprises a plurality of cavities distributed along planes transversal to said axis, said cavities being arranged through the thickness of the elastomeric material, the cavities of each transversal plane being arranged at a distance in axial sense, offsett and partially overlapped with respect to the cavities of the adjacent transversal planes, the portion of elastomeric material comprised between two adjacent cavities in one same transversal plane being arranged substantially in central position with respect to the width of the cavity of the immediately underlying transversal plane.

Therefore the essential characteristic of the invention is a body of elastomeric material provided with a plurality of cavities passing through its thickness, said cavities being offset with respect to one another according to a pre-fixed geometry, so that in consequence of the compressive force exerted on the body itself, the parts full of elastomeric

4

material will be obliged to penetrate into the immediately underlying cavities.

In this way there is obtained a movement and a deep deformation of the whole elastomeric structure with consequent high absorption of energy.

Of course, to a greater number of cavities there will correspond, in consequence of the compressive force, a deeper and a more diffuse modification of the geometry of the elastomeric body and, substantially, a very high flexibility with a corresponding low value of elastic reaction and a high damping effect will be determined.

The present invention will be better understood by the following detailed description made by way of non-limiting example, with reference to the figures of the accompanying sheets of drawings in which:

figure 1 shows a perspective view of the shock-absorbing device in its more general aspects;

figure 2 represents in perspective view a preferred alternative embodiment of figure 1;

figure 3 represents an axial section of the device in a loading condition;

figure 4 represents the device of figure 1 applied to a suspension.

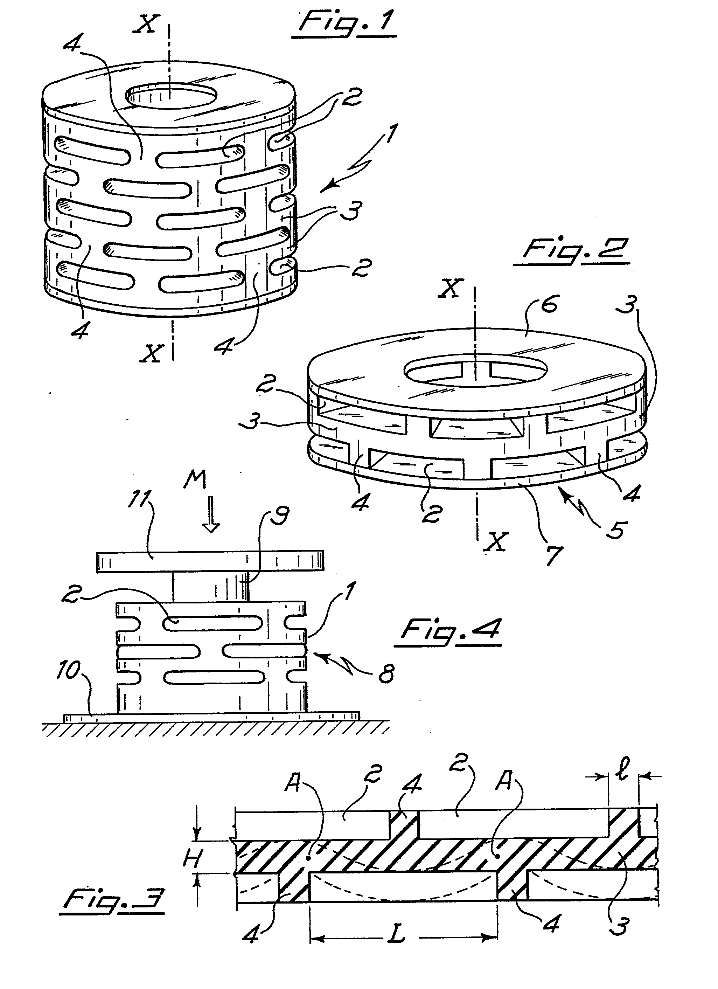

The device 1 of the invention comprises an elastomeric body, in the example of figure 1 it is represented in the form of a

5

cylinder placed between two end plates, comprising a plurality of cavities 2, distributed along planes transversal to the axis X-X aligned with the direction of the force or with the resultant of the forces to be damped; said cavities 2 that in an example are radially directed, pass through the thickness of the elastomeric material and the cavities of a transversal plane are offset and partially overlapped with respect to the cavities of the adjacent transversal planes.

The cavities of a transversal plane are separated from the cavities of the immediately underlying transversal plane by means of a thickness of elastomeric material 3.

According to the essential principle of the invention the portion of elastomeric material 4 separating two cavities adjacent in one plane is arranged substantially in central position with respect to the width of the cavity of the immediately underlying transversal plane.

Preferably, the cavities have a narrow section shape, for example rectangular, radiused at the corners, ovoidal, in the form of two ovoidal cavities radiused by a cylindrical portion, in the form of a rhomb with radiused corners. The cavities, still for example, can have initial sections different from those of the figure and then under the work loading can assume a substantially flat configuration with walls perpendicular to the direction of the axis X-X.

In a further preferred embodiment of the invention, the elastomeric body 1 is constituted by a plurality of cushioning pads, one of which is shown in figure 2 with number 5.

6

Each cushioning pad 5, comprises on two overlapped planes a plurality of cavities 2, moreover the cushioning pad of elastomeric material is delimited in the upper and in the lower parts by two armours 6 and 7 of plastic or of metal.

The various cushioning pads are associated to one another up to form the elastomeric material 1 of desired height and are joined with one another since the opposite armours comprise suitable ribs and grooves for a mutual centering operation.

The elastomeric body 1 in order to form the wished shock-absorbing device can comprise a plurality of unities, each unity being formed by overlapping various cushioning pads 5; in this case the various unities are mounted among them in parallel.

The shock-absorbing device according to the invention can have a shape different from that shown in figures 1 and 2, for example a parallelepiped shape, maintaining in all the various possible realizations the conditions of cavity 2, separated from the portions full of elastomeric material disposed in central position with respect to the width of the cavities present in an immediately underlying plane.

In one of the many possible examples, it has been represented in figure 3 the behaviour, in the presence of a compressive force, of an elastomeric body having a square or rectangular plan. The deformation of the body is represented very schematically in figure with dotted line.

In figure 3, H indicates the value of the thickness of the full elastomeric layer 3 separating the cavities of two different planes, L indicates the width of a cavity, l

indicates the width of the full elastomeric forming the separating element comprised between contiguous cavities lying in one same plane.

As shown in said figure 3 the portion A-A of elastomeric material acts as a beam subjected to a load distributed for a width 1 with supports constituted by the portions of elastomeric material 4; by modifying the geometric parameters H, L, it is possible to vary the thickness and the free length of the beam so as to obtain a very forced flexibility for the whole structure of the elastomeric body.

Therefore, starting from a compound having a determined hysteresis value and removing the elastomeric material of the body 1, provided with the cited cavities 2 having a predetermined geometry, subsequently modified as it has just been explained, it is possible to obtain a high compressibility of the elastomeric material, and since to a high compressibility there corresponds a low elastic reaction, it is produced a high absorption of energy with a modest return of said energy and definitely it is reached an efficacious damping effect of the force deforming the elastomeric body.

The aforementioned shock-absorbing device can be used in various applications, among which here there are cited those relating to the suspensions of an oscillating mass: for example the device is now described in connection with the suspension of a single support engine connected to the chassis of a motor vehicle.

In this case the suspension 8 (figure 4) comprises an elastic element 9, for example a metallic helical spring or a low

8

hysteresis cylinder of elastomeric material introduced in the central hole-of the elastomeric body 1 of figure 1.

As low hysteresis element it is possible to use natural, sylicone rubber and like material, using for the material of the shock-absorbing body 1 a compound of high hysteresis hard rubber, for example styrene or butyl rubber.

The body 1 and the element 9 have the ends associated to a support 10 connected to the chassis of the motor vehicle.

The upper end of the low hysteresis element 9 i on its turn associated to an upper plate 11 integral with the mass M of the engine.

The connections between body 1 and element 9 with the metal parts of the motor vehicle are of known type according to diffused techniques with regard to the rubber-metal bonding.

In the conditions of figure, the element 9 is in substantial compression conditions and the elastomeric body 1 has its own upper end far from the plate 11.

In the operation, the low hysteresis element 9 constitutes the part of the suspension apt to elastically react against the oscillations in stationary conditions of the mass of the engine, determining practically the frequency to which the engine can oscillate so as fixed by the builder.

The elastomeric body 1 constitutes instead the part of the suspension whose intervention takes up when the plate 11 in consequence of an unexpected oscillation of great amplitude, generally at low frequency, begins to compress the elastomeric body 1.

As explained with reference to figure 3, in this case the energy transmitted by the oscillation of the mass is absorbed in the deformation work of the initial geometry of the cavity 2 and the returned energy constitutes a very modest percentage with respect to the starting one since the rigidity of the body 1 has been strongly attenuated by the removal of material for the formation of the cited cavities making thus the body 1 yielding and consequently endowed with a low capacity to elastically react against the deforming cause.

The low hysteresis element 9 has then the further function to bring once again the plate 11 to the stationary conditions.

Further embodiments, in addition to that which has been described up to now, fall within the field of protection of the present invention.

In the realization of figure 4, the element 9, for example a metallic spring, could be placed with the turns outside the elastomeric body 1.

Moreover there could be provided to arrange a metallic spring 9 and an elastomeric body 1 with axes parallel to one another instead that concentric as shown in figure 4.

Also the scheme of figure 4 could be used, for example, for the suspensions of the back wheels of a motor vehicle; in this case the low hysteresis elastomeric element and the high hysteresis elastomeric body 1 are still arranged between a fixed support and an oscillating mass and i.e. between a cross-member or like element integral with the wheel hubs and to the chassis of the motor vehicle.

The invention overcomes all the drawbacks of the known devices. In fact, the present invention does not provide during operation, relative slidings between the parts as in the shock-absorbing devices based oin phenomena of dissipation of energy due to friction.

Therefore the invention produces the advantage of a longer life, not being present those wear problems connected to the cited relative sliding among the parts.

The present invention with respect to the fluid-dynamic dampers provides the advantage of not having constant viscosity connections between an oscillating mass and a supporting frame.

As known in the fluid-dynamic dampers the bond of a constant viscosity liquid determinates noise problems.

The object of the invention not having bonds of hydraulic type, but only of elastomeric type, have the advantage with respect to the fluid-dynamic dampers of being greatly noiseless, this characteristic being more and more required in the automotive field.

The invention presents moreover a clear improvement with regard to all the shock-absorbing devices comprising an elastomeric material having a full section with high hysteresis. In fact, contrary to what could happen in the mentioned device of the state of the art, in presence of a compression load, no phenomena of lateral bending due to

11

buckling load takes place; in fact, the device according to the present invention through the cavities 2 obtained in the elastomeric body 1 attenuates greatly its rigidity in axial sense. In practice, the shock-absorbing device of the invention under load becomes compressed varying its volume, just contrary to what happened in the known devices having full section, which owing to the fact of not changing in volume can undergo possible dilatations of the intermediate parts under the load effect with consequent unacceptable interference risks of shock-absorbing parts having the means arranged all aroound, for example with the metallic springs of the suspensions of a motor vehicle.

Although some particular advantageous embodiments of the invention have been described, it is understood that the invention includes in its scope any other alternative embodiment accessible to a technician of this field and deriving from the above indicated inventive principle.

WHAT IS CLAIMED IS:

1. Shock-absorbing device (1) comprising a body of elastomeric material having an axis aligned with the direction of the force to be damped, characterized by the fact that said body comprises a plurality of cavities (2) distributed along planes transversal to said axis, said cavities being arranged through the thickness of the elastomeric material, the cavities of each transversal plane being arranged at a distance in axial direction, offset and partially overlapped with respect to the cavities of the adjacent transversal planes, the portion of elastomeric material (4) comprised between two adjacent cavities in one same transversal plane being arranged substantially in central position with respect to the width of the cavity of the immediately underlying transversal plane.

2. Device as in claim 1, characterized by the fact that the cavities of said body have a substantially flat shape.

3. Device as in claim 1, characterized by the fact that said body is constituted by a plurality of cushioning pads (5) of elastomeric material comprising cavities, said pads being overlapped among them, and each pad being delimited between two armours (6), (7).

4. Device as in claim 1, characterized by the fact of comprising in combination with said body of elastomeric material an elastic element (9), said element being arranged in compression state between a suitable support (10) and an oscillating system (M), said body (1) of elastomeric material being associated at one extremity to said support (10) and having the opposite extremity at a distance from said oscillating system.

5. Device as in claim 4, characterized by the fact that said elastic element is a low hysteresis elastomeric material.

6. Device as in claim 4, characterized by the fact that said elastic element is natural rubber.

7. Suspension (8) for engine characterized by the fact of comprising a body of elastomeric material (1) having an axis aligned with the direction of the force to be damped and an elastic element (9), said body comprising a plurality of cavities (2) distributed along planes transversal to said axis, said cavities being arranged through the thickness of elastomeric material, the cavities of each transversal plane being arranged at a distance in axial sense, offset and partially overlapped with respect to the cavities of the adjacent transversal planes, the portion (4) of elastomeric material comprised between two cavities adjacent in the same transversal plane being arranged substantially in central position with respect to the width of the cavity of the immediately underlying transversal plane, said elastic element (9) being disposed between a support (10) and a plate (11) to which there is associated the engine and being disposed between said support and said plate in compression state, said body of elastomeric material being arranged with one extremity associated to said support and having the opposite extremity at a distance from said plate associated to the engine.

8. Suspension as in claim 7, characterized by the fact that said elastic element is constituted by a metallic cylindrical spring.

3

9) Suspension as in claim 8, characterized by the fact that said body of elastomeric material has a cylindrical shape and is disposed around said elastic element.

111

**Fig.1**

**Fig.2**

**Fig.4**

**Fig.3**